# EUROPÄISCHE PATENTSCHRIFT

(11) **EP 2 416 040 B1**
(45) Veröffentlichungstag und Bekanntmachung des Hinweises auf die Patenterteilung: **29.05.2013**
(21) Anmeldenummer: 11175983.3
(22) Anmeldetag: 29.07.2011
(51) Int. Cl.: F16K 17/40, F16K 31/163, F16K 31/165, F16K 31/122, F16K 31/00, F16L 55/10

(54) **Absperrarmatur**
Shut-off valve
Armature de verrouillage

(30) Priorität: 04.08.2010 DE 102010033438
(43) Veröffentlichungstag der Anmeldung: 08.02.2012
(73) Patentinhaber: Becker, Dominic, 59519 Möhnesee (DE)
(72) Erfinder:
(74) Vertreter: Griepenstroh, Jörg

(56) Entgegenhaltungen:
- EP-A2- 1 491 413
- DE-A1- 10 000 447
- DE-A1-102007 062 505
- DE-C1- 19 910 215
- DE-U1- 9 307 536

## Beschreibung

Die Erfindung betrifft eine extrem schnell schließende Absperrarmatur mit den Merkmalen des Patentanspruchs 1.

Absperrarmaturen dienen zum Sperren einer durchströmten Leitung mittels eines Sperrkörpers, der von einer Offenstellung in eine Schließstellung verlagert wird. Die Schließzeiten werden durch die Form des Antriebs bestimmt.

Insbesondere zur sofortigen sicheren Absperrung von Rohrleitungen für Gase, Luft und Schüttgüter, z. B. als Schutzeinrichtung bei einem Störfall durch sehr schnell reagierende chemische Prozesse, werden Absperrarmaturen mit extrem kurzen Schließzeiten eingesetzt. Diese aktiven Absperrsysteme werden im Falle einer Auslösung z.B. durch Magnetventile aktiviert. Aus einem Druckluftspeicher strömt dann komprimierte Luft in einen Antriebszylinder, welcher die Armatur innerhalb von Millisekunden schließt. Sowohl die Ausbreitung gefährlicher Medien und Feuer als auch die Druckausbreitung werden effektiv gestoppt. Nach der Auslösung kann die Armatur ohne Reparaturaufwand problemlos wieder aktiv geschaltet und durch seine zerstörungsfreie Arbeitsweise jederzeit validiert werden. Diese bewährten Systeme setzen voraus, dass ständig ein hinreichend groß dimensionierter Druckluftspeicher zur Verfügung steht, und sind von den relativ längeren Reaktionszeiten der Magnetventile abhängig.

Pyrotechnische Systeme arbeiten dahingehend mit einem Gasgenerator, bei welchem ein Feststoff elektrisch gezündet wird, so dass Reaktionsgase entstehen, die sich im Millisekundenbereich ausbreiten und daher ebenfalls dazu geeignet sind, den gewünschten Schließmechanismus auszulösen. Diese Systeme sind zwar klein, allerdings hat sich gezeigt, dass die Druckentfaltung der Reaktionsgase für den spezifischen Anwendungsfall nicht optimal ist. Das heiße Reaktionsgas expandiert zunächst sehr stark, so dass der Sperrkörper rasch von einer Offenstellung in eine Schließstellung verlagert wird. Anschließend kommt es jedoch zu einer Abkühlung des Reaktionsgases mit der Folge, dass es sich zusammenzieht und der am Antrieb der Armatur anstehende Schließdruck abfällt, Bei nicht fachgerechter Auslegung einer solchen Armatur kann sich das Gasvolumen so stark verkleinern, so dass es zu einem unerwünschten Zurückstellen, beispielsweise der Absperrplatte eines Ventils, kommt. Die gewünschte nachhaltige absolut sichere Trennung des Durchganges wird dann nicht erreicht.

Zum Stand der Technik ist die DE 10 2007 062 505 A1 zu nennen, welche eine Absperrarmatur als Schutzeinrichtung zum Sperren einer durchströmten Leitung mittels eines Sperrkörpers, welcher von einer Ofenstellung in eine Schließstellung verlagerbar ist, offenbart. Der Sperrkörper ist bevorzugt mit einer Textilverstärkung versehen und weist im aufgeblasenen Zustand eine ovale Form auf.

Die DE 100 00 447 A1 offenbart eine Sicherungseinrichtung für Gasanwendungsanlagen, bei welcher ein Absperrorgan im Gefahrenfall sicher geschlossen werden soll. Hierzu ist dieses innerhalb einer Rohrleistungsarmatur als ein mit einer Schließfeder belastetes Durchgangsventil ausgebildet, dessen pneumatisches Stellglied innerhalb eines seitlichen Ansatzstutzens aus einem mittels einer auswechselbaren Flüssiggaspatrone gespreizten Faltenbalg besteht.

Ferner zählt durch die DE 93 07 536 U1 eine Armatur zum Absperren von mit Hausanschlüssen verbundenen und mit Gasen beaufschlagten Versorgungsleitungen zum Stand der Technik. Mit einer solchen Armatur soll ein direktes Schließen der Versorgungsleitung am Hausanschluss bei Auftreten von Gefahren ermöglicht werden. Nach dem Auslösen bzw. Schließen soll die Armatur ohne großen Aufwand wieder gespannt bzw. geöffnet werden können. Es wird eine Armatur vorgeschlagen die ein Gehäuse aufweist, zwei an diesem angeordnete Anschlussstutzen und eine Auslösevorrichtung. In dem Gehäuse ist ein einen Ventilsitz aufweisender Ring vorgesehen, durch welchen konzentrisch eine Stange ragt, die an der einen Seite einen Ventil-Verschlusskegel und an der anderen Seite eine Hülse mit stirnseitigen Durchlässen aufweist. Zwischen dem Ring und der Hülse ist eine Druckfeder angeordnet, so dass zwischen dem Ventil-Verschlusskegel und dem Ventildichtsitz ein Abstand gebildet ist. Zur Betätigung der Auslösevorrichtung ist ein Magnetventil vorgesehen. Zum erneuten Spannen ist in dem Gehäuse eine Wiederspannvorrichtung angeordnet. Die Widerspannvorrichtung ist mit einem gasförmigen Druckmittel beaufschlagbar.

Hiervon ausgehend liegt der Erfindung die Aufgabe zugrunde, eine sichere Absperrarmatur zum Sperren einer durchströmten Leitung mittels eines Sperrkörpers aufzuzeigen, welche sowohl klein und wartungsarm als auch gleichzeitig sicher schließend ausgebildet ist, ohne mit den Nachteilen einer rein pyrotechnischen Auslösung behaftet zu sein und ohne, dass eine aufwendige Bereitstellung eines großen Druckluftspeichers zur Auslösung notwendig ist.

Die Aufgabe der Erfindung wird durch eine Absperrarmatur mit den Merkmalen des Patentanspruchs 1 gelöst.

Vorteilhafte Weiterbildungen der Erfindung sind Gegenstand der Unteransprüche.

Die Aufgabe wird im Rahmen der Erfindung insbesondere dadurch gelöst, dass eine pneumatische Stelleinrichtung mit einem Hybridgasgenerator gekoppelt ist. Ein solcher Hybridgasgenerator besitzt eine Kammer mit einem Gasgenerator und eine sich über einen Einlass daran anschließende, Druckgas enthaltende Druckgaskammer. Die Brennkammer und die Druckgaskammer sind fluidleitend miteinander verbunden, allerdings im Ausgangszustand über eine Membran voneinander getrennt. In der Druckgaskammer herrscht ein hoher Überdruck. Das dort gespeicherte Druckgas wird über die einlassseitige Membran und eine weitere, auslassseitige Membran gehalten und kann erst durch Zerstörung der beiden Membranen austreten.

Bei Aktivierung des Hybridgasgenerators wird der Feststoff des Gasgenerators in der ersten Kammer zur Reaktion gebracht. Es entsteht eine sehr große Gasmenge, die rasch zu einem Überdruck in dieser Kammer führt, so dass die Membran zur Druckgaskammer zerstört wird. Dadurch steigt auch der Druck in der Druckgaskammer, bis schließlich die auslassseitige Membran ebenfalls zerstört wird. Das Druckgas tritt nun aus dem Hybridgasgenerator in die Stelleinrichtung, die zur Betätigung des Sperrkörpers vorgesehen ist.

Das Besondere bei der Verwendung von Hybridgasgeneratoren im konkreten Fall ist, dass einerseits eine hinreichend hohe Auslösegeschwindigkeit durch die pyrotechnische Auslösung erreicht wird und zum anderen, dass der notwendige Druck durch die Überlagerung des Reaktionsgases aus der Reaktionskammer mit dem Druckgas aus der Druckgaskammer aufrecht erhalten werden kann, wenn sich das Gasgemisch nach der pyrotechnischen Auslösung wieder abkühlt. Dadurch wird sichergestellt, dass sich der Sperrkörper durch Kontraktion des Gases nicht selbsttätig wieder zurückstellt, sondern eine nachhaltige sichere Absperrung gewährleistet.

Die erfindungsgemäße Armatur ist platzsparend, sicher und vereint die Vorteile einer pyrotechnischen Auslösung mit den Vorteilen eines Druckgasspeichers.

Die Wirkung derartiger Armaturen ist so durchschlagend, dass dafür gesorgt werden muss, dass der Sperrkörper seinen zugehörigen Ventilsitz nicht zerstört. Insbesondere wenn es sich bei der pneumatischen Stelleinrichtung um eine Kolben-Zylinder-Anordnung handelt, ist sicherzustellen, dass der Kolben nicht ungebremst bis zu einem Endanschlag verlagert wird, sondern in irgendeiner Weise abgebremst wird.

In vorteilhafter Weiterbildung der Erfindung erfolgt dies dadurch, dass an der als Kolben-Zylinder-Anordnung ausgeführten Stelleinrichtung ein Entlüftungskanal mit einer Drossel vorgesehen ist, die als pneumatische Bremse für den Kolben der Kolben-Zylinder-Anordnung dient. Durch eine Drossel kann ein Gegendruck aufgebaut werden. Es entsteht ein Staudruck, welcher die Bewegung des Kolbens abbremst.

Der Sperrkörper ist beispielsweise eine Absperrplatte, die im Winkel zur Längsachse der zu sperrenden Leitung verschiebbar ist. Denkbar ist es auch, dass der Sperrkörper ein in Längsrichtung der zu sperrenden Leitung verlagerbarer Schließkörper ist.

Besonders zweckmäßig ist es, wenn die Armatur in Modulbauweise mit einem austauschbaren Hybridgasgenerator versehen ist. In erfindungsgemäßer Weiterbildung ist daher vorgesehen, dass der Hybridgasgenerator als vorkonfigurierte Baugruppe in ein Gehäuse der Armatur lösbar eingliederbar ist. Das Gehäuse ist wiederum als eigenständige Baugruppe mit der Stelleinrichtung verbunden.

An dem Gehäuse ist in vorteilhafter Weiterbildung der Erfindung ein Steuerkanal vorgesehen, welcher an den Stauraum angeschlossen ist. Der Stauraum ist vorgesehen, damit das austretende Druckgas möglichst vollständig verbrennen kann, bevor es in den Zylinder der Kolben-Zylinder-Anordnung einströmt. Aus dem gleichen Grund sollte das austretende Gas auch nicht in Axialrichtung, sondern radial in den Stauraum eintreten. Die Austrittsöffnung des Stauraums ist hingegen axial orientiert. Das Gasgemisch wird also um 90° umgelenkt.

Über den Steuerkanal kann der Stauraum unabhängig von dem Hybridgasgenerator mit Druckluft beaufschlagt werden und dadurch die Armatur mit einer externen Druckgasquelle betrieben werden.

In konstruktiver Hinsicht wird es als vorteilhaft angesehen, wenn der Hybridgasgenerator als längliches, rohrförmiges Bauteil eine außenseitige Einschnürung aufweist, über welche er in dem Gehäuse fixierbar ist. Hierzu kann mindestens ein formschlüssiges Halteelement in die Einschnürung greifen. Bei einem zweiteiligen Gehäuse kann ein abschraubbarer, oberer Gehäuseteil, das Halteelement gegen einen unteren Gehäuseteil pressen, so dass der Hybridgasgenerator sicher lagefixiert ist. Durch einfaches Abschrauben des oberen Gehäuseteils werden die Halteelemente frei und der Hybridgasgenerator kann aus dem Gehäuse entnommen oder in das Gehäuse eingesetzt werden.

Die Erfindung wird nachfolgend anhand eines in schematischen Zeichnungen dargestellten Ausführungsbeispiels näher erläutert. Es zeigt:
- Figur 1: einen Querschnitt durch den oberen Teil / die Energieversorgung des Antriebs einer Absperrarmatur;
- Figur 2: einen Querschnitt durch den unteren Teil / einen Pneumatikzylinder des Antriebs einer Absperrarmatur.

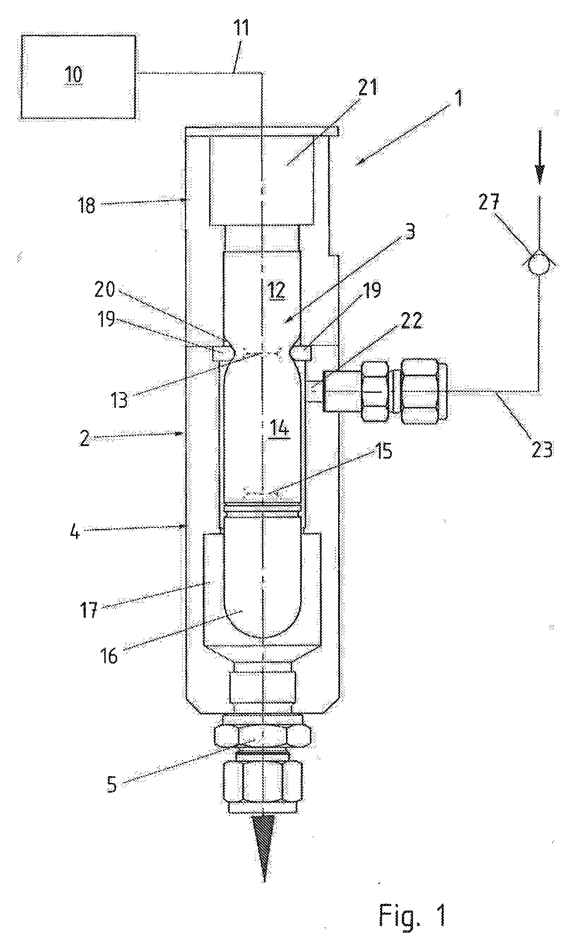

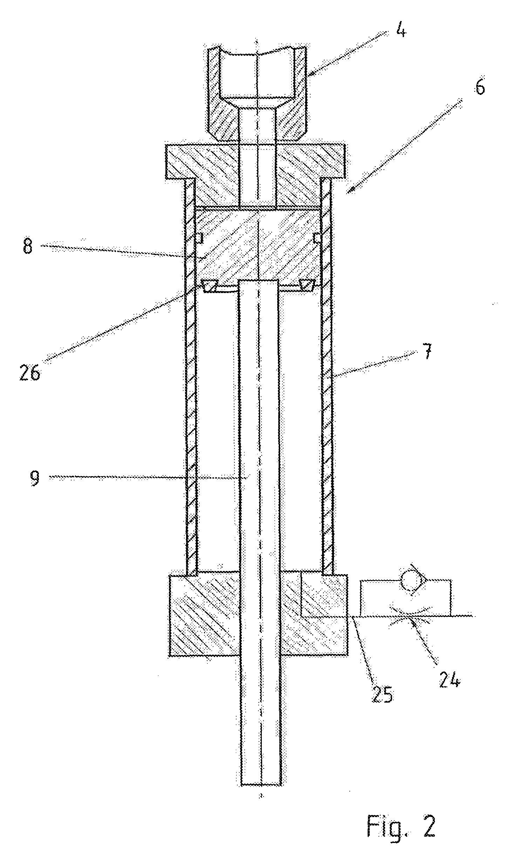

Figur 1 zeigt eine Querschnittsdarstellung durch den oberen Teil eines Antriebs 1 einer Armatur 1. Dieser obere Teil wird von einem Gehäuse 2 gebildet, in welchem als Energieversorgung ein Hybridgasgenerator 3 lösbar aufgenommen ist. Das Gehäuse 2 ist zweiteilig aufgebaut. Der untere Gehäuseteil 4 wird über eine Schraubverbindung 5 mit einer Stelleinrichtung 6 gekoppelt, wie sie rein schematisch in Figur 2 dargestellt ist. Bei diesem Ausführungsbeispiel handelt es sich bei der Stelleinrichtung 6 um eine Kolben-Zylinder-Anordnung.

Aus Gründen der Übersichtlichkeit wurde die Schraubverbindung 5 der Figur 1 in der Darstellung der Figur 2 weggelassen und nur das untere Ende des oberen Gehäuseteils 4 dargestellt, wie es mit der Stelleinrichtung 6 zu koppeln ist.

Die Stelleinrichtung 6 umfasst einen Zylinder 7 mit einem darin angeordneten Kolben 8, welcher über eine Kolbenstange 9 mit einem nicht näher dargestellten Sperrkörper verbunden ist. Der Sperrkörper ist insbesondere als flache Armatur / Absperrplatte ausgebildet, welcher eine durchströmte Leitung als Schutz bei Auslösung des oberen Antriebsteils 1 sperren soll.

In Figur 1 ist rein schematisch eine Auslösung 10 dargestellt, die über eine elektrische Leitung 11 mit dem Hybridgasgenerator 3 gekoppelt ist. Die Umstände für die Aktivierung der Armatur sind unerheblich. Beispielsweise kann die Aktivierung als Schutzeinrichtung bei einer erfolgten oder drohenden Reaktion / Störfall erfolgen.

Der Hybridgasgenerator 3 besitzt in seinem oberen Drittel eine Reaktionskammer 12 mit einem nicht näher dargestellten Reaktionsstoff des Gasgenerators. Durch elektrische Aktivierung mittels des Auslösers 10 wird der Gasgenerator aktiviert, so dass Gase entstehen. Der Druck in der Kammer 12 steigt, so dass eine Membran 13, welche diese Kammer 12 und eine sich an die Kammer 12 anschließenden Druckgaskammer 14 trennt, durchstoßen wird. Der Druck in der Druckgaskammer 14 steigt, so dass eine weitere Membran, die Auslassmembran 15 zerstört wird. Das Druckgas kann nun über nicht näher dargestellte radiale Auslässe in einer Endkappe 16 in einen Stauraum 17 einströmen, welcher den Großteil der Endkappe 16 radial außenseitig umgibt. Von hier ausgehend kann das heiße Gas in den Zylinder 7 der in Figur 2 dargestellten Stelleinrichtung 6 einströmen und den Kolben 8 verlagern.

Der Hybridgasgenerator 3 kann nur ein einziges Mal verwendet werden. Er ist nach der Aktivierung auszutauschen. Dies erfolgt dadurch, dass ein oberer Gehäuseteil 18, der nicht näher dargestellter Weise mit dem unteren Gehäuseteil 4 verbunden, insbesondere verschraubt ist, von dem unteren Gehäuseteil 4 abgenommen wird. Dadurch werden zwei als halbschalenförmige Klemmbacken ausgestaltete Halteelemente 19 frei, welche in eine außenseitige Einschnürung 20 des Hybridgasgenerators 3 formschlüssig eingreifen. Der obere Gehäuseteil 18 besitzt an seinem oberen Ende einen stirnseitig offenen Aufnahmeraum 21, der zur Eingliederung eines elektrischen Steckverbinders dient, über welche die elektrische Leitung 11 angeschlossen wird.

Figur 1 zeigt darüber hinaus einen schematisch angedeuteten Steuerkanal 22, welcher über einen Ringspalt umfangsseitig des Hybridgasgenerators 3 fluidleitend mit dem Stauraum 17 verbunden ist. Dadurch kann der Antrieb der Armatur zusätzlich mit Druckluft, vorzugsweise mit Drücken von 4 - 6 bar, betätigt werden.

Gegen Druckverlust bei Auslösung des Hybridgasgenerators 3 ist die Zuleitung 23 mit einem Rückschlagventil 27 gesichert.

Figur 2 zeigt eine Drossel 24 an einem Entlüftungskanal 25, der in dem Ringraum der Kolben-Zylinder-Anordnung mündet. Über die Drossel 24 kann ein Gegendruck aufgebaut und eingestellt werden, der als pneumatische Bremse für den Kolben 8 dient, damit er bei Auslösung nicht ungebremst an den Endanschlag der Stelleinrichtung 6 prallt. Die Drossel 24 ist als Rückschlagdrossel aufgebaut, wie anhand des Schaltzeichens in Figur 2 zu erkennen ist. Zusätzlich können in dem Kolben Dämpfungselemente 26 vorgesehen sein, hier in Form eines in Abstand von der Kolbenstange 9 umlaufenden, elastomeren Rings auf der Ringraumseite des Kolbens 8.

### Bezugszeichen:

- 1-: Absperrarmatur
- 2-: Gehäuse
- 3-: Hybridgasgenerator
- 4-: Unterer Gehäuseteil
- 5-: Schraubverbindung
- 6-: Stelleinrichtung
- 7-: Zylinder
- 8-: Kolben
- 9-: Kolbenstange
- 10-: Auslöser
- 11 -: Elektrische Leitung
- 12-: Zündkammer
- 13-: Membran
- 14-: Druckgaskammer
- 15-: Auslassmembran
- 16-: Endkappe
- 17-: Stauraum
- 18-: Oberer Gehäuseteil
- 19-: Halteelement
- 20-: Einschnürung
- 21-: Aufnahmeraum
- 22-: Steuerkanal
- 23-: Zuleitung
- 24-: Drossel
- 25 -: Entlüftungskanal
- 26-: Dämpfungselement
- 27-: Rückschlagventil

## Patentansprüche

1. Absperrarmatur als Schutzeinrichtung zum Sperren einer durchströmten Leitung mittels eines Sperrkörpers, welcher von einer Offenstellung in eine Schließstellung verlagerbar ist, **dadurch gekennzeichnet, dass** eine pneumatische Stelleinrichtung (6) mit einem Hybridgasgenerator (3) gekoppelt ist, wobei der Hybridgasgenerator (3) eine Reaktionskammer (12) mit einem Gasgenerator und eine sich über einen Einlass daran anschließende, ein Druckgas enthaltende Druckgaskammer (14) aufweist, wobei der Einlass mittels einer durch Aktivierung des Gasgenerators durchstoßbaren Membran (13) von der Reaktionskammer (12) getrennt ist, wobei die Druckgaskammer (14) von einer Auslassmembran (15) verschlossen ist, die dafür vorgesehen ist, bei Aktivierung des Gasgenerators zerstört zu werden und das Druckgas in die Stelleinrichtung (6) freizugeben.

2. Absperrarmatur nach Anspruch 1, **dadurch gekennzeichnet, dass** die pneumatische Stelleinrichtung (6) als Kolben-Zylinder-Anordnung ausgeführt ist,

3. Absperrarmatur nach Anspruch 2, **dadurch gekennzeichnet, dass** der Zylinder (7) der als Kolben-Zylinder-Anordnung ausgeführten Stelleinrichtung einen Entlüftungskanal (25) mit einer Drossel (24) aufweist, die als pneumatische Bremse für den Kolben (8) als Kolben-Zylinder-Anordnung ausgeführten Stelleinrichtung (6) dient.

4. Absperrarmatur nach Anspruch 3, **dadurch gekennzeichnet, dass** die Drossel (24) so gewählt oder einstellbar ist, dass sich ein Gegendruck von mindestens 2,5 bar aufbaut.

5. Absperrarmatur nach einem der Ansprüche 1 bis 4, **dadurch gekennzeichnet, dass** der Sperrkörper als Absperrplatte ausgeführt ist, der im Winkel zu Längsachse der zu sperrenden Leitung verschiebbar ist.

6. Absperrarmatur nach einem der Ansprüche 1 bis 4, **dadurch gekennzeichnet, dass** der Sperrkörper ein in Längsrichtung der zu sperrenden Leitung verlagerbarer Schließkörper ist.

7. Absperrarmatur nach einem der Ansprüche 1 bis 6, **dadurch gekennzeichnet, dass** der Hybridgasgenerator (3) als vorkonfigurierte Baugruppe in ein Gehäuse (2) lösbar eingliederbar ist, welches einen Stauraum (17) zur Aufnahme der aus dem Hybridgasgenerator (3) austretenden Gase aufweist.

8. Absperrarmatur nach Anspruch 7, **dadurch gekennzeichnet, dass** die Stelleinrichtung (6) unabhängig von dem Hybridgasgenerator (3) mittels einer weiteren Druckquelle betätigbar ist.

9. Absperrarmatur nach Anspruch 7 oder 8, **dadurch gekennzeichnet, dass** der Hybridgasgenerator (3) eine außenseitige Einschnürung (20) aufweist, in weiche mindestens ein formschlüssiges Haltelement (19) greift, über welches der Hybridgasgenerator (3) mit dem Gehäuse (2) lösbar gekoppelt ist.

## Claims

1. A shut-off fitting as a protective device for blocking a line through which material flows by means of a blocking member which may be displaced from an open position into a closed position, **characterised in that** a pneumatic actuator (6) is coupled with a hybrid gas generator (3), wherein the hybrid gas generator (3) comprises a reaction chamber (12) with a gas generator and a pressurised gas chamber (14) connected thereto via an inlet and containing a pressurised gas, wherein the inlet is separated from the reaction chamber (12) by means of a membrane (13) pierceable by activation of the gas generator, wherein the pressurised gas chamber (14) is closed by an outlet membrane (15) which is intended to be destroyed on activation of the gas generator and to release the pressurised gas into the actuator (6).

2. A shut-off fitting according to claim 1, **characterised in that** the pneumatic actuator (6) takes the form of a piston/cylinder arrangement.

3. A shut-off fitting according to claim 2, **characterised in that** the cylinder (7) of the actuator taking the form of a piston/cylinder arrangement comprises a vent duct (25) with a choke (24) which serves as a pneumatic brake for the piston (8) of the actuator (6) taking the form of a piston/cylinder arrangement.

4. A shut-off fitting according to claim 3, **characterised in that** the choke (24) is selected or adjustable such that a back pressure of at least 2.5 bar develops.

5. A shut-off fitting according to any one of claims 1 to 4, **characterised in that** the blocking member takes the form of a shut-off plate which is displaceable at an angle to the longitudinal axis of the line to be blocked.

6. A shut-off fitting according to any one of claims 1 to 4, **characterised in that** the blocking member is a closing member displaceable in a longitudinal direction to the line to be blocked.

7. A shut-off fitting according to any one of claims 1 to 6, **characterised in that** the hybrid gas generator (3) may be detachably incorporated as a preconfigured assembly into a housing (2) which comprises a storage space (17) for accommodating the gases emerging from the hybrid gas generator (3).

8. A shut-off fitting according to claim 7, **characterised in that** the actuator (6) is actuatable by means of a further pressure source independently of the hybrid gas generator (3).

9. A shut-off fitting according to claim 7 or claim 8, **characterised in that** the hybrid gas generator (3) comprises an external constriction (20), in which engages at least one interlocking retaining element (19), via which the hybrid gas generator (3) is detachably coupled with the housing (2).

## Revendications

1. Armature de verrouillage servant de dispositif de protection pour le verrouillage d'une conduite d'écoulement à l'aide d'un corps de verrouillage qui peut être déplacé d'une position ouverte à une position fermée, **caractérisée en ce qu'**un dispositif de réglage pneumatique (6) est couplé à un générateur de gaz hybride (3), le générateur de gaz hybride (3) présentant une chambre de réaction (12) avec un générateur de gaz et une chambre de gaz comprimé (14) contenant un gaz comprimé, s'y raccordant par une entrée, l'entrée étant séparée de la chambre de réaction (12) par une membrane (13) pouvant être traversée par l'activation du générateur de gaz, la chambre de gaz comprimé (14) étant fermée par une membrane de sortie (15) prévue afin d'être détruite lors de l'activation du générateur de gaz et de libérer le gaz comprimé dans le dispositif de réglage (6).

2. Armature de verrouillage selon la revendication 1, **caractérisée en ce que** le dispositif de réglage pneumatique (6) est réalisé comme un ensemble à piston et cylindre.

3. Armature de verrouillage selon la revendication 2, **caractérisée en ce que** le cylindre (7) du dispositif de réglage réalisé comme un ensemble à piston et cylindre présente un canal d'aération (25) avec un étranglement (24) servant de frein pneumatique pour le piston (8) du dispositif de réglage (6) réalisé comme un ensemble à piston et cylindre (6).

4. Armature de verrouillage selon la revendication 3, **caractérisée en ce que** l'étranglement (24) est choisi ou peut être réglé de sorte qu'une contre-pression d'au moins 2,5 bars s'établisse.

5. Armature de verrouillage selon l'une quelconque des revendications 1 à 4, **caractérisée en ce que** le corps de verrouillage est réalisé comme une plaque de verrouillage mobile de manière angulaire par rapport à l'axe longitudinal de la conduite à verrouiller.

6. Armature de verrouillage selon l'une quelconque des revendications 1 à 4, **caractérisée en ce que** le corps de verrouillage est un corps de fermeture déplaçable dans le sens longitudinal de la conduite à verrouiller.

7. Armature de verrouillage selon l'une quelconque des revendications 1 à 6, **caractérisée en ce que** le générateur de gaz hybride (3) peut être intégré de manière détachable sous la forme d'un bloc préconfiguré dans un boîtier (2), lequel présente une zone de stockage (17) pour la réception des gaz sortant du générateur de gaz hybride (3).

8. Armature de verrouillage selon la revendication 7, **caractérisée en ce que** le dispositif de réglage (6) peut être actionné indépendamment du générateur de gaz hybride à l'aide d'une autre source de pression.

9. Armature de verrouillage selon la revendication 7 ou 8, **caractérisée en ce que** le générateur de gaz hybride (3) présente un rétrécissement (20) côté extérieur, dans lequel au moins un élément de retenue (19) à complémentarité de formes s'engage, par lequel le générateur de gaz hybride (3) est couplé de manière détachable au boîtier (2).
